# EUROPEAN PATENT SPECIFICATION

(11) **EP 0 409 991 B1**
(45) Date of publication and mention of the grant of the patent: **02.11.1995**
(21) Application number: 89909615.0
(22) Date of filing: 25.08.1989
(51) Int. Cl.: C09K 3/14

(54) **ABRASIVE GRAIN AND METHOD OF PRODUCING SAME**
SCHLEIFKORN UND VERFAHREN ZUR HERSTELLUNG
GRAIN ABRASIF ET PROCEDE DE PRODUCTION

(30) Priority: 25.08.1988 JP 2110/87
(43) Date of publication of application: 30.01.1991
(73) Proprietor: SHOWA DENKO KABUSHIKI KAISHA, Minato-ku, Tokyo (JP)
(72) Inventor: HASEGAWA, Mitsuru Showa Denko Kabushiki Kaisha, Shiojiri-shi Nagano-ken 399-64 (JP); HIRAIWA, Tadashi Showa Denko Kabushiki Kaisha, Shiojiri-shi Nagano-ken 399-64 (JP); HATANAKA, Tetsuo Showa Denko Kabushiki Kaisha, Shiojiri-shi Nagano-ken 399-64 (JP)
(74) Representative: Lamb, John Baxter
(86) International application number: JP8900869
(87) International publication number: WO9002160

(56) References cited:
- EP-A- 0 024 099
- EP-A- 0 248 788
- JP-A- 6 397 681
- JP-A- 6 411 184

## Description

### TECHNICAL FIELD

The present invention relates to an abrasive grain to be used as a durable polycrystalline sintered ceramic grinding material and to its method of manufacture. The grain has an alumina as a base material and is made using an improved sol/gel process.

### BACKGROUND ART

A manufacturing method of an abrasive polycrystalline sintered ceramic grain for grinding, using high-density alumina (Al₂O₃) as a base material and a sol/gel manufacturing process, is well-known. Patent application JPA 56-32369 (corresponding to US-A-4518397 and EP-A-24099) describes that an alumina hydrate may be gelled together with a precursor comprising at least one kind of reforming component, then dried and sintered. The reforming component used in this case includes oxides of Co, Hf, Mg, Ni, Zn and Zr. Patent application JP-A-60-231462 (corresponding to US-A-4623364 and EP-A-152768) describes a sol/gel method for accelerating the manufacture of high-density alumina by adding alpha-alumina seed crystals, which may be added to the gel as a crystal growth control agent comprising oxides of Si, Cr, Mg, and Zr.
Patent application JP-A-61-254685 (corresponding to US-A-4744802 and EP-A-200487) states a method for adding alpha-alumina, alpha-ferric oxide, or their precursors into a sol as a nucleating agent, and includes a statement that the gel may contain precursors of oxides of Mg, Zn, Co, Ni, Zr, Hf, Cr and Ti. The use of Mg, Ti or Ni or their oxides is disclosed in EP-A-0248788.

Although producing alumina sintered abrasive grain with a sol/gel process yields strong fine abrasive polycrystal grain. If made from pure alumina, the grain's crystals are coarse and do not have a uniform size. Therefore, the grain is improved by adding reforming components, such as MgO and ZrO₂, into the alumina sol material, as described above. However, because low-hardness substances like spinel, are formed in the grain boundary of the abrasive grain polycrystal, the average hardness and strength of the abrasive grain could be improved even further. Although the grain hardness has been raised to some extent by these methods, further improvements are both possible and desirable.

### DETAILED DESCRIPTION OF THE INVENTION

The present invention provides a strong abrasive grain made by combining a micro-crystallizing technology that uses a sol/gel process and a crystal strengthening technology that uses solid solutions.

Upon request from the grinding industry, the applicants of the present invention developed a method wherein the resulting crystals are both finer and stronger. According to this method, no layer softer than alpha-Al₂O₃ is formed in the grain boundary.
Therefore, the present invention provides a process for manufacturing an abrasive grain consisting of α-Al₂O₃ crystal particles no larger than 0.5 µm, the grain having at least one of Ti, Mg, Ni, Co, Mn, Zn, V, Ga, or Rh solidly dissolved in the α-Aℓ₂O₃ crystal particles the a-axis length of the hexagonal unit cell of the α-Aℓ₂O₃, as measured by powder X-ray diffraction, being from 0.475892 to 0.476340 nm (4.75892 to 4.76340 Å) when said solidly dissolved material comprises at least one of Ti, Mn, V, Ga, Zn, or Rh, or from 0.475930 to 0.476340 nm (4.75930 to 4.76340 Å) when said solidly dissolved material comprises at least one of Mg, Ni, or Co, and the abrasive grain has a density greater than 90% of the theoretical value, by gelling alumina sol into alumina gel and then sintering said alumina gel, the process comprises the steps of: adding 0.005 to 2.23 mol% of particles of at least one of Ti₂O₃, MgO.Ti₂O₃, NiO.TiO₂, CoO.TiO₂,
MnO.TiO₂, ZnO.TiO₂, V₂O₃, Ga₂O₃, or
Rh₂O₃, having an α-Al₂O₃ structure and having the size of less than 2 µm or an α-Al₂O₃ solidly dissolved with at least one of these elements, into the alumina sol; gelling the alumina sol into the alumina gel; and sintering the alumina gel at a temperature between 1000°C and 1400°C.

The invention also provides an abrasive grain consisting of α-Al₂O₃ crystal particles no larger than 0.5 µm obtainable by a process according to one of claims 1, 2, and 3, characterized in that said particles have solidly dissolved at least one of Ti, Mn, V, Ga, Zn, Rh, Mg, Ni, or Co, wherein the a-axis length of the hexagonal unit cell of the α-Al₂O₃, as measured by powder X-ray diffraction, is from 0.475892 to 0.476340 nm (4.75892 to 4.76340 Å) when said solidily dissolved material comprises at least one of Ti, Mn, V, Ga, Zn, or Rh, or from 0.475930 to 0.476340 nm (4.75930 to 4.76340 Å) when said solidly dissolved material comprises at least one of Mg, Ni, or Co, and that said abrasive grain has a density greater than 90% of the theoretical value.

Furthermore, the present invention provides grindstones and abrasive papers which apply the above-mentioned abrasive grain.

Ti₂O₃, if used, may be added into the alumina sol as a quadrivalent titanium compound (TiO₂, for example), which is gelled and then sintered at 1,000°C to 1,400°C in a reducing atmosphere. This is possible because TiO₂ is reduced during the sintering to form Ti₂O₃. Although using an ilmenite system compound makes it difficult to obtain a uniform product, a titanium compound (Ti(OH)₄, for example) and a compound of other constituting metals (Ni(NO₃)₂, for example) may be added at a molar equivalent per the titanium and the other metal M (nickel, for example). In this case, also, MO-TiO₂ (M is, for example, nickel) is formed during the sintering, though it does not constitute 100% of the product.
If particles having alpha-corundum structure are added into the alumina sol as seeds, the energy needed to form alpha-alumina crystal nuclei is spared, and therefore the alpha-alumina crystals can grow at a reduced temperature. As a result, the growth of crystals of undesirable structure, which often occurs at high temperatures, can be avoided. This conserves energy to grow the crystals epitaxially on the seeds (the added particles) rather than causing the growth of new alpha-alumina crystal nuclei. Accordingly, alpha-alumina crystal particles are more difficult to develop, a uniform particle size is obtained, and the abrasive grain strength is improved. Energy conservation is greatest when using a crystal identical to the deposited crystal, a crystal having the same structure, and a crystal having like structure, in that order. Crystal deposition and growth is optimized using seed particles having the same alpha-corundum structure as pure alpha-alumina (Al₂O₃).
However, the applicants of the present invention have discovered that, to produce an abrasive grain with stronger alpha-alumina crystals, it is better to add into the alumina sol particles having an alpha-corundum structure, rather adding containing the elements that can be solidly dissolved into the alpha-alumina, than to add pure alumina as the seed.
The particles having a corundum structure include Ti₂O₃, MgO·TiO₂, FeO·TiO₂, NiO·TiO₂, CoO·TiO₂, MnO·TiO₂, ZnO·TiO₂, V₂O₃, Ga₂O₃ and Rh₂O₃, alternatively alpha-Al₂O₃ solid solution with these elements. The metal ion addition described above does not produce an remarkable improvement in solid solution as may be expected. Other oxides of these elements do not form a true solid solution. The amount of the particles addition to solid solution is 0.005 to 2.23 mol%, and preferably in the range of 0.01 to 1.15 mol%. If the added amount is less than 0.005 mol%, an enhancement in the alpha-alumina crystal strength cannot be expected. If the amount is more than 2.23 mol%, the amount required for a solid solution to the alpha-alumina crystals is exceeded, causing local crystal deposition in the grain boundary of the alpha-alumina crystals, causing the formation of soft layers in the grain boundary, and resulting in an overall decrease in hardness and strength of the abrasive grain. If seeds are added to an extent that enhances the grain strength and does not reduce it, the abrasive grain made under the present invention has an a-axis length of the alpha-Al₂O₃ hexagonal unit cell from 0.475892 to 0.476340 nm (4.75092 to 4.76340 Å) when measured by powder X-ray diffraction.
The smaller the crystal size in an alumina sintered abrasive grain, the higher is its grinding performance. Generally, however, if a low temperature is used in sintering, the crystal size is small, but not sufficiently dense to improve. The smallness in crystal size alone is not sufficient to improve the grinding properties. The sintering density must also be raised to at least 90% of the theoretical value. The present invention provides such an alumina sintered abrasive grain.
If the density is raised, the alumina sintered abrasive grain increases more in strength, if the crystal size is more reduced, resulting in a product which withstands the requirements of heavy-duty grinding. Furthermore, the crystal size should be substantially less than 0.5 micron. Therefore, the size of the seed to be added into the alumina sol must be less than 2 µm (micron). If the seed crystal are small, less seed material is required, and the characteristics of the abrasive grain product is improved. In the present invention, at least one of Ti₂O₃, MgO·TiO₂, NiO·TiO₂, CoO·TiO₂, MnO·TiO₂, ZnO·TiO₂, V₂O₃, Ga₂O₃ and Rh₂O₃, or an alpha-Al₂O₃ particle that can be solid dissolved with these elements, is added into an alumina sol. If metal compounds other than aluminum are added into an alumina sol in an ionic state, as described in previous inventions or in Japanese patent application JP-A-57-207672, these elements remain in the grain boundaries of the alumina crystals even after drying and sintering. There, they suppress the formation of unusually large crystals and they do not grow crystals epitaxially on the seeds as in the present invention, and they do not make sintered grains comprising of small crystals to which these ions are solidly dissolved. In addition, titanium ion cause the formation of TiO₂ when oxidized in air, and this is deposited into at the grain boundaries of the alumina crystals. The Ti₂O₃ used in the present invention is, as well-known, formed only in a non-oxidizing atmosphere or in a vacuum. Therefore, unless it is added in the form of Ti₂O₃, it will not behave as intended by the present invention even if the titanium ion is added into the sol, nor will the titanium form a solid solution if it is sintered in a reducing atmosphere as described above. If Ti₂O₃, a meta-stable compound of the same form as alpha-Al₂O₃, is oxidized, it forms a stable TiO₂ and is deposited at the crystal grain boundaries when added into an alumina sol even when in the form of a fine grain, not to mention in the form of an ion. In the present invention, the Ti₂O₃ seed is covered by the alumina sol, whereby the compound will not be exposed to an oxidizing atmosphere even in an ordinary process of making alumina sintered abrasive grain. In this way it remains as Ti₂O₃, rather than turning into TiO₂, and the alumina is then deposited on its surface.

V₂O₃ is formed by reducing V₂O₅ by hydrogen or carbon, and undergoes the same reactions and produce the same phenomena as in the case of the above Ti₂O₃, forming a meta-stable compound.

MgO·TiO₂, NiO·TiO₂, CoO·TiO₂, MnO·TiO₂, and ZnO·TiO₂ have an ilmenite structure. FeO·TiO₂, in particular, is a natural mineral found in large quantities. These materials can be obtained when the hydroxides or carbonates of the respective metals are eutectically dissolved with TiO₂ . For example, when MgO·TiO₂, is put into an alumina sol in the form of MgO and TiO₂ independently, MgO Al₂O₃ is generated preferentially as described above, unless it is added in a well dispersible form (for example, Mg(OH)₂ and Ti(OH)₄). Therefore, the above metals must be added in the form of MgO·TiO₂, for example, as mentioned above.
Measurement accuracy for the lattice constant of alpha-Al₂O₃, one of the constituting factors of the present invention, is described as follows. The lattice interval, d, of a (330) plane is measured, and the measurement is sextupled to obtain the a-axis length. The diffraction angle of (330) plane, 2-theta is 152.4 degrees when Cuk_{α} is used as the most common X-ray. In the high angle of this extent, K_{α1} and K_{α2} are completely separated, and the measurement of 2-theta can be read up to 0.001°C by a goniometer. Therefore, lattice interval d can be measured to six significant figures. In the meantime, the a-axis length of pure alpha-Al₂O₃, which does not contain the solid solution, is 0.475890 nm (4.75890 Å).
The grinding wheel, according to the present invention, is made of the above-described abrasive grains formed and hardened by a bonding material, such as a vitrified bond, metal bond, or resin bond. A grindstone that uses a vitrified bond is a preferred application of the present invention.
The bond used in the vitrified grindstone is what is generally called a frit, a carefully proportioned mixture of feldspar, pottery stone, borax, and clay, and its constituents include SiO₂, B₂O₃, Al₂O₃, CaO, MgO, Na₂O, and K₂O. Such a bond, with a small amount of a starch like dextrin added, is mixed with abrasive grains, formed in a press, dried, and fired to produce a vitrified grindstone. When the present invention is employed, the firing is to be done preferably at 950°C to 1150°C so that the crystals of the abrasive grain do not become coarser. Abrasive paper is made of a base material bonded with the abrasive grain using a bond, the bond being a phenol resin bond which is most often used for its excellent abrasion and water resistance. The bonding may be more easily if the bond is mixed with resorcinol or its derivatives. Paper, cloth, non-woven cloth and so on are utilized as base materials. More detailed explanations of the present invention are below with reference to the examples. The present invention is not limited to these examples.

### Example 1

First, titanium grain was mixed with TiO₂ and formed into pellets. The pellets were sintered in a vacuum for one hour at 1400°C, pulverized, and the particles classified to obtain fine Ti₂O₃ particles for seed having a maximum particle size of 0.5 µm and an average size of 0.2 µm.
Next, 0.03 g of seed was suspended in 20 ml of water acidified to pH 3 by nitric acid, and 4 g of commercial-grade boehmite was added to this suspension and to produce a sol. While the sol was maintained at approximately 40°C for about 24 hours, it was stirred by a heating magnetic stirrer with a heater to produce a gel. The gel was then dried for 3 days at 100°C. This dry gel was coarsely pulverized to produce particles of less than 1 mm. The particles were placed in an alumina crusible, and subjected to calcination in a muffle furnace at 750°C for 120 minutes under a flow of hydrogen, followed by full sintering at 1250°C for 100 minutes. After being allowed to cool naturally, a sample particle was divided into two pieces, and the exposed face was examined under a scanning electron microscope. Observation reveals that the crystals in the particles had a well-defined size of 0.4 µm. Xylene immersion showed the specific gravity of this sample to be 3.96.
The sample particles were then further pulverized to about 10 micron to measure the a-axis length of the hexagonal unit cell by means of a powder X-ray diffraction process. The result was 0.476190 nm (4.76190 Å) larger by 3.0 x 10⁻⁴ nm (3.0 x 10⁻⁵ Å) than in pure alpha-Al₂O₃.
Next, the sample particle was embedded into a resin, polished to mirror face grinding, and given an indentation with a load of 500 kg using a micro Vickers' indenter. The sample developed very little lateral cracks or Palmgvist cracks which can be seen in pure alpha-Al₂O₃ sintered particles (this is explained in Ceramics Japan, 20 (1), 12 (1985).) This means that the sample particle has a much greater strength than pure alpha-Al₂O₃.

### Example 2

A sample particle was prepared by the same method as in Example 1, except that 0.6g of 0.2 µm seed was used, and it contained 2.8 wt.%Ti₂O₃ in an alpha-Al₂O₃ solid solution. The a-axis length of this sample was 0.475930 nm (4.75930 Å) with very few lateral and Palmgvist cracks.

### Example 3

Mgo and TiO₂ were eutectically mixed to make MgO·TiO₂, which was pulverized and the resulting particles classified to obtain MgO·TiO₂ particles for seed having an average size of 0.2 µm. Using this seed, a sample particle was prepared in the same manner as in Example 1. The a-axis length of this sample was 0.476190 nm (4.76190 Å). This sample also developed very few lateral and Palmgvist cracks under an indentation test using a micro Vickers indenter.

### Example 4

875g of commercial-grade nickel carbonate, NiCO₃-2Ni(OH)₂-4H₂O, and 500g of anatase titanium oxide were put into a polyethylene container together with polyurethane balls of 20 mm in diameter as a stirring medium. These ingredients were mixed in a rotating pot mill rack, then heated to 1250°C for two hours in a muffle furnace. About 950g of a reactant of was removed out and observed under an X-ray diffractometer, by which NiTiO₃ having a similar diffraction pattern with alpha-Al₂O₃ and a small amount of NiO, were identified. The obtained nickel titanate was pulverized in an iron pot mill for four days. The pulverized material was sufficiently adhesive enough that it lined the inside wall of the iron pot mill and the surface of the iron balls of its own accord. Consequently, there was very little contamination with iron, however, the material was washed with excess hydrochloric acid for the sake of caution.
Next, the above solution was decanted to remove the hydrochloric acid, and the material was repeatedly washed with water. After several washings, when the top of the liquid was hardly free of turbidity, a specific surface area of the suspended solids was 80 m²/g. The iron contamination in during the pulverization process was 0.05% by weight.

To investigate the efficacy of the slurry of the NiTiO₃ fine powder thus obtained, the slurry was added to 8 kg of commercial-grade boehmite (SB Alumina made by Condea) so as to form a solid which was 1% by weight of NiTiO₃, the total volume of the miture was 44 liters of water (including the slurry) and 500 ml of 67.5% nitric acid to make an alumina sol. The sol was stirred for about two hours, then heated at 80°C for 16 hours to produce a gel. The gel was desiccated by maintaining at 120°C for 7 hours, grinding it, and passing it through a sieve to obtain particles of about 500 to 300 micron. Then, crystallized water was removed from the particles by heating them 600°C for two hours in a muffle furnace, and the particles were put into a rotary kiln in which the temperature was raised from room temperature to 1300°C in 1 minute. The sample was kept at 1300°C for one minute, then treated for 10 hours at 1100°C. The density of the particles at this time was 3.95, or 99% of the theoretical value. The Vickers hardness under a load of 500 g was 2260 kg/mm².
In addition, to observe the crystal size of particles, the sample was immersed in a 90°C saturated solution of borax (Na₂B₄O₇·10 H₂O) and then etched at 900°C for 30 minutes. After cooling, the sample was washed by dilute hydrochloric acid to remove the glass layer formed on the surface, and subjected to an SEM observation. SEM photographic observation at a magnification of 20,000 showed that the crystal size of particles ranged from 0.15 to 0.40 µm in size, with an average size of 0.23 µm No particles larger than 0.5 µm were found.
The particle size after sintering ranged from 350 to 250 µm which corresponds to abrasive powder #60 in JIS R6001-1973.

### Example 5

Other than using 288 g of commercial-grade manganese carbonate MnCO₃ and 200 g of anatase-type titanium oxide as raw materials, the same processes as in Example 4 were applied to obtain an MnTiO₃ slurry with a solid content of 43 mg/ml and solid specific surface area of 102 m²/g. Sintered particles were obtained by the same processes as in Example 4. The micro Vickers hardness of the sinter was 2120 kg/mm².

### Example 6

A small amount of TiCl₄ was dissolved into water to obtain a suspension of Ti(OH)₄. After by-product HCl was removed using an anion exchange resin, the suspension was added, in place of the Ti₂O₃ used in Example 1, in an amount equivalent 0.03 g Ti₂O₃ to produce a sol. Thereafter, using the same processes as in Example 1, the gel was heated in a hydrogen atmosphere in a furnace, in which the temperature was raised to 800°C in three hours and from 800°C to 1300°C in 17 minutes.
The gel was maintained at 1300°C degrees for five minutes. Then the heating was cut and the gel was allowed to cool. The obtained alumina particles had approximately the same characteristics as those obtained in Example 1.

### Example 7

A small amount of TiCl₄ and Ni(NO₃)₂-6H₂O were dissolved in water at an equivalent molar ratio. Alumina sintered particles were made under the same processes as in Example 4, except that an amount of the solution equivalent to the amount of NiTiO₃ in the NiTiO₃ fine powder slurry in Example 4, converted as NiTiO₃. Although there was nonuniformity in the properties of the particles, the particles showed, on average, approximately the same characteristics as those obtained in Example 4. Table 1 shows the characteristics of abrasive grains obtained in Example 1 through 8.

**Table 1**

| Example | Seed | Density (g/cm³) | Crystal size ( µm ) | Hv(500) (kg/mm²) |
|---|---|---|---|---|
| 1 | Ti₂O₃ | 3.96 | 0.4 | 1920 |
| 2 | Ti₂O₃ 2.8% solid solution alumina | 3.96 | 0.3 | 2000 |
| 3 | MgO·TiO₂ | 3.96 | 0.5 | 2080 |
| 4 | NiO·TiO₂ | 3.95 | 0.23 | 2260 |
| 5 | MnO·TiO₂ | 3.96 | 0.5 | 2120 |
| 6 | Ti(OH)₄ | 3.96 | 0.4 | 1950 |
| 7 | NiO·TiO₂ | 3.96 | 0.5 | 2210 |
| Note: Crystal size According to SEM photographs. Hv (500): Vickers hardness at a load of 500 g. Particle size of abrasive grain: #24 | | | | |

### Example 8

An alpha-Al₂O₃ abrasive grain was made using the same processes used for NiO·TiO₂ in Example 4, except that 470 g of marketed CoO was used as a cobalt source and sintering for seed synthesis was carried out in an argon atmosphere. The characteristics of the grain are shown in Table 2.

### Example 9

Using commercial-grade V₂O₅ as a raw material, V₂O₃ was obtained by heating in a hydrogen atmosphere at 800°C for one hour. An alpha-Al₂O₃ abrasive grain was made using the same processes as in Example 1.
The characteristics of the grain are shown in Table 2.

### Example 10

Commercial-grade Ga₂O₃ was pulverized in a pot mill made of zirconia, classified according to size using water as a classifying medium, and a slurry of less than 0.1 µm was obtained. An alpha-Al₂O₃ abrasive grain was made using the same processes as in Example 1. The characteristics of the grain are shown in Table 2.

### Example 11

An alpha-Al₂O₃ abrasive was made using the same processes as in Example 11, commercial-grade Rh₂O₃ was used. The characteristics of the grain are shown in Table 2.

### Example 12

An alpha-Al₂O₃ abrasive grain was made using the same processes as in Example 4, except that 510 g commercial-grade ZnO was used as a zinc source. The characteristics of the grain are shown in Table 2.

**Table 2**

| Example | Kind of seed | Density (g/cm³) | Crystal size ( µm ) | Hv(500) (kg/mm²) |
|---|---|---|---|---|
| 8 | CoO·TiO₂ | 3.96 | 0.4 | 2000 |
| 9 | V₂O₃ | 3.96 | 0.5 | 2000 |
| 10 | Ga₂O₃ | 3.95 | 0.5 | 1900 |
| 11 | Rh₂O₃ | 3.96 | 0.5 | 1900 |
| 12 | ZnO·TiO₂ | 3.96 | 0.4 | 2100 |
| Note: It's better to repeat the notes of the Table 1 | | | | |

### Reference Example 1 (Abrasive grain as described in patent application 56-32369)

An alumina abrasive grain containing MgO (particle size #60) was made using the same processes as in Example 21, which is described in the patent application 56-32369. The abrasive grain has the following characteristics:
MgO content: 6%
Hardness Hv(500): 1410 kg/mm² Density: 3.61 g/cm²
Crystal size: 1 to 3 µm.

### Reference Example 2 (Abrasive grain as described in Japanese patent application JP-A-60-231462)

Two hundred grams of pseudo-boehmite of SB Pural Alumina (marketed by Condea) and 1.5 liters of water were mixed in a beaker. Next, to produce a sol, 0.30 liter of HNO₃ (3.6% by weight) was added to yield a solution of pH2. Then 7 kg of alumina balls and 1.5 liters of water were put into 7.3-liter alumina pot which was rotated for 96 hours so that the alumina balls could grind themselves. As a result, a slurry was obtained containing particles from the alumina balls produced during the grinding operation. The specific surface area of these particles was 75 m²/g.
Next, the slurry was added to the alumina sol in such an amnount that the particles constituted 1.5% by weight of the alumina (Al₂O₃). After two hours of stirring, the sol was transferred to a vat, and dried first at 80°C for 48 hours, then at 120°C for 24 hours. After drying, the dry gel was pulverized in a mortar and sieved to a maximum particle size of 500 micron and a minimum size of 350 micron. The sieved dry gel was treated at 750°C for one hour, removing the NOx contained in the nitric acid, and then sintered in a rotary kiln at 1400°C for one minute. The time taken to raise the temperature to 1400°C was 15 minutes.
The sintered particle size of the abrasive grain was 0.2 to 0.5 µm, with an average size of 0.3 µm; the Vickers hardness at a load of 500 g was 2230 kg/mm²; and the density was 3.89 g/cm³, or 98% of the theoretical density.

### Reference Example 3 (Abrasive powder as described in Japanese patent application JP-A-61-254685)

The abrasive powder was made by the method described in the Japanese patent application JP-A-61-254685. The abrasive grain had the following characteristics:
Density: 3.92 g/cm³, Crystal size: 0.5 µm
Hardness HV (500): 2120 kg/mm²

### Example 13

Thirteen parts of borosilicate frit (a vitrified grindstone bond), two parts of dextrin, and 2.5 parts of water were mixed with 100 parts of abrasive grain #60 in Example 4. The borosilicate frit used was composed of 70% SiO₂, 7% Al₂O₃, 18% B₂O₃, 4.0% Na₂O+K₂O, and 0.5% CaO+MgO. After mixing, the material was formed in a press. The formed material, comprised of 45% abrasive grain, was dried at 110°C, then heat-treated at 1050°C for 20 hours. The material was cooled, with especially slow cooling through 500°C and 600°C.
Thus, a vitrified grindstone was produced, with a bonding rate of K as specified in JIS R6210. The size of the grains in the grindstone of this Example, made to correspond to that of the abrasive grain in Example 4, measured 200 x 19 x 76.2mm.

### Reference Example 4 and 5

In relation to the #60 abrasive grain in Example 2 and the #60 single crystal alumina abrasive grain 32A made by Norton, Inc., vitrified grindstones measuring 200 x 19 x 76.2 mm were made using the same processes as Example 14, and are named as reference samples.

### Example 14

The performances of the vitrified grindstones in Example 14 and Reference samples 4 and 5 were evaluated under the following test conditions:

**Table 3**

| Test Conditions | |
|---|---|
| Machine | Okamoto Heiken, CFG-52(3.7kw) |
| Grinding system | Plunge grinding, down cut, manual cut |
| Grinding material | SDK-1(HRC 60) |
| | L₁₀₀ x h₅₀ x t₁₀ |
| Grinding wheel surface speed | 2000 m/min |
| Table speed | 20 m/min |
| Cut-in size | R₂₀ micron/pass |
| Total cut-in size | 5 mm |
| Grinding width | 10 mm |
| Spark-out | 1 pass |
| Grinding oil | Dry type (no oil used) |
| Dressing condition | Single stone diamond dresser |
| Cut-in Size: | R₂₀ µm /pass |
| Total cut-in size: | 0.2 mm/r.o.w. |
| Spark-out: | None |

Table 4 shows values for the grinding ratio, maximum electric power consumption (value excluding no-load power (0.4kW)), and surface roughness.

**Table 4**

| Sample No. | Grinding ratio (mm³/mm³) | Maximum Consumption power (KW/cm) | Surface roughness (MRZ) |
|---|---|---|---|
| | | | 1=2.5mm N=3 |
| Example 13 | 47 | 1.1 | 15 |
| Reference Example 4 | 35 | 1.3 | 18 |
| Reference Example 5 | 7 | 1.7 | 20 |

As Table 4 shows, the abrasive grain of the present invention has as much as six times the grinding ratio of Reference Example 5 (the single crystal alumina abrasive grain 32A that is available on the market), and has remarkably higher values than Reference Example 4 (the grindstone using a trace grade abrasive grain as described in Japanese patent application JP-A-60-231462). The grinding performance is greatly improved compared to conventional products. In spite of the improved grinding performance, the maximum power consumption is lower than Reference Example 4 and 5, and the surface roughness is several steps better than the Comparisons. In addition, the burn of work piece, which occurs in Reference Example 5 extremely frequently and in Reference Example 4 relatively frequently, did not occur at all in Example 14. The product of the present invention is an abrasive grain and a grindstone unsurpassed by any conventional product.

### Example 15

The parts of resorcinol were dissolved into ten parts of ethanol, then added to 100 parts of the abrasive grain of Example 14. This mixture is dried at 100°C for one hour to remove ethanol by evaporation. As a result, three kinds of grinding material coated with resorcinol were obtained.

The phenol resin bond BRL-2867 (about 70wt% solid, it was made by Showa Kobunshi Co.) was evenly coated on a compressed non-woven fabric base material at a rate of 100 g/m², and then the coated grinding materials were spread out and excess material removed. 250 g/m² of all three kinds of grinding material were deposited on the base material. These sheets were dried at 80°C for 4 hours, after that, the bond was coated evenly at a rate of 200 g/m², then dried at 80°C for four hours. The temperature was then raised from 80°C to 135°C in two hours, retained at 135°C for 30 minutes, and grinding cloths were thus obtained..Reference Example 6 and 7
Using the abrasive grain in Comparisons 1 and 2, grinding cloths using the non-woven fabric base material were made using the same processes as Example 16, and are named Reference Example 6 and 7.

### Example 16

The grinding cloths in Example 16 and Reference Example 6 and 7 were cut into 180 mm in diameter discs, then used as dry grinders under the following test conditions.

**Table 5**

| Test conditions | | |
|---|---|---|
| Sander | Hitachi PHD-180C | |
| Grinding time | 1 min. x 10 grindings | |
| Ground material | (a) SPC | 10 x 250 x t |
| | (b) SUS 304 | 9 x 250 x t |
| Load | 3 lbs. | |

The grinding values are shown in Table 6 and 7.

**Table 6**

| Grinding SPC | | | |
|---|---|---|---|
| Sample No. | Initial grinding amount (g/min) | 9 to 10 minutes grinding amount (g/min) | Total grinding amount (g) |
| Example 15 | 22.3 | 5.2 | 128.0 |
| Reference Example 6 | 15.5 | 2.1 | 67.9 |
| Reference Example 7 | 19.0 | 3.3 | 96.1 |

**Table 7**

| Grinding SUS 304 | | | |
|---|---|---|---|
| Sample No. | Initial grinding amount (g/min) | 9 to 10 minutes grinding amount (g/min) | Total grinding amount (g) |
| Example 15 | 6.1 | 2.5 | 33.7 |
| Reference Example 6 | 3.6 | - | 5.7 |
| Reference Example 7 | 4.9 | - | 6.2 |

The reason Table 7 lacks figures for 9 to 10 minutes grinding amounts in Reference Example 6 and 7 is that the ground materials started a burn in four minutes, the ground amount had fallen to an extremely low value, and the grinding therefore had to be stopped.
As Table 6 shows, when the ground material was cold-rolled steel SPC, the performance of the grinding cloth of the present invention was 1.3 to 1.9 times the total grinding amount of Reference Example 7 (a grinding cloth using trace grade abrasive grain as described in Patent application 60-231462). When the ground material was SUS 304, the total ground amount was 5.4 to 6.1 times that of conventional products -- a remarkable improvement.

### Possibilities for Industrial Use

The abrasive grain of the present invention uses alpha-alumina, the crystal size of which is finer than the alumina sintered abrasive grain conventionally used. Increasing the strength of the crystals enhanced the strength of the abrasive grain, greatly improving its utility for heavy-duty or precision grinding.

Furthermore, the grindstone and grinding cloth using the present invention's abrasive grain show better grinding performance, thus greatly contributing to its potential for industrial use.

## Claims

1. A process for manufacturing an abrasive grain consisting of α-Al₂O₃ crystal particles no larger than 0.5 µm, the grain having at least one of Ti, Mg, Ni, Co, Mn, Zn, V, Ga, or Rh solidly dissolved in the α-Aℓ₂O₃ crystal particles the a-axis length of the hexagonal unit cell of the α-Aℓ₂O₃, as measured by powder X-ray diffraction, being from 0.475892 to 0.476340 nm (4.75892 to 4.76340 Å) when said solidly dissolved material comprises at least one of Ti, Mn, V, Ga, Zn, or Rh, or from 0.475930 to 0.476340 nm (4.75930 to 4.76340 Å) when said solidly dissolved material comprises at least one of Mg, Ni, or Co, and the abrasive grain has a density greater than 90% of the theoretical value, by gelling alumina sol into alumina gel and then sintering said alumina gel, the process comprises the steps of: adding 0.005 to 2.23 mol% of particles of at least one of Ti₂O₃, MgO.TiO₂,
NiO.TiO₂, CoO.TiO₂, MnO.TiO₂, ZnO.TiO₂,
V₂O₃, Ga₂O₃, or Rh₂O₃, having an
α-Al₂O₃ structure and having the size of less than 2 µm or an α-Al₂O₃ solidly dissolved with at least one of these elements, into the alumina sol; gelling the alumina sol into the alumina gel; and sintering the alumina gel at a temperature between 1000°C and 1400°C.

2. A process for manufacturing an abrasive grain consisting of α-Al₂O₃ crystal particles no larger than 0.5µm having Ti solidly dissolved therein, the a-axis length of the hexagonal unit cell of the α-Al₂O₃, as measured by powder X-ray diffraction, being from 0.475892 to 0.476340 nm (4.75892 to 4.76340 Å), and the abrasive grain having a density greater than 90% of the theoretical value, by gelling alumina sol into alumina gel, and then sintering said alumina gel, the process comprising the steps of: adding 0.005 to 2.23 mol% of at least one of titanium oxide (having an α-al₂O₃ structure and having the size of less than 2 µm), titanium hydroxide or salt of titanium into the alumina sol; gelling alumina sol into the alumina gel; and sintering in a reducing atmosphere at a temperature between 1000°C and 1400°C.

3. A process for manufacturing an abrasive grain consisting of α-Al₂O₃ crystal particles no larger than 0.5 µm, having at least one of Mg, Ni, Co, Mn or Zn solidly dissolved in the α-Al₂O₃ crystal particles, the a-axis length of the hexagonal unit cell of the α-Al₂O₃, as measured by X-ray powder diffraction, being from 0.475892 to 0.476340 nm when the solidly dissolved material comprises Mn or Zn, of from 0.475930 to 0.476340 nm when the solidly dissolved material comprises Mg, Ni or Co; and the abrasive having a density of greater than 90% of the theoretical, by gelling alumina sol into alumina gel, and then sintering said alumina gel, the process comprising the steps of: adding 0.005 to 2.23 mol% of at
least one of hydroxides, salt, or ions of Mg^{II}, Ni^{II}, Co^{II}, Mn^{II}, and Zn^{II}, and the equivalent molar ratio thereof of at least one of titanium hydroxide, or salt of titanium, together into the alumina sol; gelling the alumina sol into the alumina gel; and sintering at a temperature between 1000°C and 1400°C.

4. An abrasive grain consisting of α-Al₂O₃ crystal particles no larger than 0.5 µm obtainable by a process according to one of claims 1, 2, and 3, characterized in that said particles have solidly dissolved at least one of Ti, Mn, V, Ga, Zn, Rh, Mg, Ni, or Co, wherein the a-axis length of the hexagonal unit cell of the α-Al₂O₃, as measured by powder X-ray diffraction, is from 0.475892 to 0.476340 nm (4.75892 to 4.76340 Å) when said solidily dissolved material comprises at least one of Ti, Mn, V, Ga, Zn, or Rh, or from 0.475930 to 0.476340 nm (4.75930 to 4.76340 Å) when said solidly dissolved material comprises at least one of Mg, Ni, or Co, and that said abrasive grain has a density greater than 90% of the theoretical value.

5. A grinding stone or grinding cloth that uses as a grinding material the abrasive grain as claimed in claim 1.

## Patentansprüche

1. Verfahren zum Herstellen eines Schleifkorns, bestehend aus α-Al₂O₃-Kristallpartikeln, nicht größer als 0,5 µm, welches Korn in den α-Al₂O₃-Kristallpartikeln in fester Lösung mindestens aufweist: Ti, Mg, Ni, Co, Mn, Zn, V, Ga oder Rh, wobei die Länge der a-Achse der hexagonalen Elementarzelle des α-Al₂O₃, gemessen mit Hilfe des Debye-Scherrer-Verfahrens (Pulver-Röntgenstrahlen-diffraktion), zwischen 0,475892 und 0,476340 nm (4,75892 bis 4,76340 Å) beträgt wenn das Material in fester Lösung mindestens aufweist: Ti, Mn, V, Ga, Zn oder Rh, oder zwischen 0,475930 und 0,476340 nm (4,75930 bis 4,76340 Å) beträgt wenn das Material in fester Lösung mindestens aufweist: Mg, Ni oder Co, und das Schleifkorn eine Dichte größer als 90 Prozent des theoretischen Werts hat, und zwar durch Gelbilden von Aluminiumoxid-Sol zu Aluminiumoxid-Gel, und nachfolgendes Sintern des Aluminiumoxid-Gels, welches Verfahren die Schritte umfaßt:
Zusetzen von 0,005 bis 2,23 Molprozent Partikel von mindestens Ti₂O₃, MgO·TiO₂, NiO·TiO₂, CoO·TiO₂, MnO·TiO₂, ZnO·TiO₂, V₂O₃, Ga₂O₃ oder Rh₂O₃ mit einer α-Al₂O₃-Struktur und der Größe kleiner als 2 µm oder einem α-Al₂O₃ in fester Lösung mit mindestens einem dieser Elemente zu dem Aluminiumoxid-Sol;
Gelbilden des Aluminiumoxid-Sols zu Aluminiumoxid-Gel; und Sintern des Aluminiumoxid-Gels bei einer Temperatur zwischen 1000 und 1400°C.

2. Verfahren zum Herstellen eines Schleifkorns, bestehend aus α-Al₂O₃-Kristallpartikeln, nicht größer als 0,5 µm mit Ti darin in fester Lösung, wobei die Länge der a-Achse der hexagonalen Elementarzelle des α-Al₂O₃, gemessen mit Hilfe des Debye-Scherrer-Verfahrens, zwischen 0,475892 und 0,476340 nm (4,75892 bis 4,76340 Å) beträgt und das Schleifkorn eine Dichte größer als 90 Prozent des theoretischen Werts hat, und zwar durch Gelbilden von Aluminiumoxid-Sol zu Aluminiumoxid-Gel, und nachfolgendes Sintern des Aluminiumoxid-Gels, welches Verfahren die Schritte umfaßt:
Zusetzen von 0,005 bis 2,23 Molprozent von mindestens einem aus Titanoxid (mit einer α-Al₂O₃-Struktur und einer Größe von weniger als 2 µm), Ti-Hydroxid oder Salz des Titans, zu dem Aluminiumoxid-Sol;
Gelbilden des Aluminiumoxid-Sols zu Aluminiumoxid-Gel; und
Sintern in einer reduzierenden Atmosphäre bei einer Temperatur zwischen 1000 und 1400°C.

3. Verfahren zum Herstellen eines Schleifkorns, bestehend aus α-Al₂O₃-Partikeln, nicht größer als 0,5 µm mit mindestens Mg, Ni, Co, Mn oder Zn in fester Lösung in den α-Al₂O₃-Partikeln, wobei die Länge der a-Achse der hexagonalen Elementarzelle des α-Al₂O₃, gemessen mit Hilfe des Debye-Scherrer-Verfahrens, zwischen 0,475892 und 0,476340 nm beträgt, wenn das Material in fester Lösung aufweist: Mn oder Zn, oder zwischen 0,475930 und 0,476340 nm beträgt, wenn das Material in fester Lösung aufweist: Mg, Ni oder Co, und das Schleifmittel eine Dichte von größer als 90 Prozent des theoretischen Werts hat, und zwar durch Gelbilden von Aluminiumoxid-Sol zu Aluminiumoxid-Gel und nachfolgendem Sintern des Aluminiumoxid-Gels, welches Verfahren die Schritte umfaßt:
Zusetzen von 0,005 bis 2,23 Molprozent von mindestens einem der Hydroxide, Salz oder Ionen von Mg^{II}, Ni^{II}, Co^{II}, Mn^{II}, Zn^{II} und dem äquivalenten Molverhältnis davon von mindestens einem Titanhydroxid oder Salz von Titan, und zwar gemeinsam in dem Aluminiumoxid-Sol;
Gelbilden des Aluminiumoxid-Sols zu Aluminiumoxid-Gel; sowie
Sintern bei einer Temperatur zwischen 1000 und 1400°C.

4. Schleifkorn, bestehend aus α-Al₂O₃-Partikeln, nicht größer als 0,5 µm, welches nach einem Verfahren gemäß Anspruch 1, 2 oder 3 hergestellt werden kann, dadurch gekennzeichnet, daß die Partikel in fester Lösung mindestens aufweisen: Ti, Mn, V, Ga, Zn, Rh, Mg, Ni oder Co, wobei die Länge der a-Achse der hexagonalen Elementarzelle des α-Al₂O₃, gemessen mit Hilfe des Debye-Scherrer-Verfahrens, zwischen 0,475892 und 0,476340 nm (4,75892 bis 4,76340 Å) beträgt, wenn das Material in fester Lösung mindestens aufweist: Ti, Mn, V, Ga, Zn oder Rh, oder zwischen 0,475930 und 0,476340 nm (4,75930 bis 4,76340 Å) beträgt, wenn das Material in fester Lösung mindestens aufweist: Mg, Ni oder Co, sowie dadurch gekennzeichnet, daß das Schleifkorn eine Dichte größer als 90 Prozent des theoretischen Werts hat.

5. Schleifstein oder Schleifleinen, bei welchem als Schleifmaterial das Schleifkorn nach Anspruch 1 verwendet wird.

## Revendications

1. Procédé de fabrication d'un grain abrasif constitué de particules de cristaux d'α-Al₂O₃, qui ne sont pas plus grandes que 0,5 µm, les grains ayant au moins un des éléments Ti, Mg, Ni, Co, Mn, Zn, V, Ga ou Rh en solution solide dans les particules de cristaux d'α-Al₂O₃, la longueur de l'axe a de la maille élémentaire hexagonale de l'α-Al₂O₃ mesurée par la diffraction des rayons X des poudres étant de 0,475892 à 0,476340 nm (4,75892 à 4,76340 Å) lorsque ladite matière en solution solide comprend au moins un des éléments Ti, Mn, V, Ga, Zn ou Rh, ou de 0,475930 à 0,476340 nm (4,75930 à 4,76340 Å) lorsque ladite matière en solution solide comprend au moins un des éléments Mg, Ni ou Co, et le grain abrasif a une densité supérieure à 90% de la valeur théorique, par gélification d'un sol d'alumine en un gel d'alumine, et ensuite par frittage dudit gel d'alumine, le procédé comprenant les étapes de:
addition de 0,005 à 2,23% molaires de particules d'au moins un de Ti₂O₃, MgO·TiO₂, NiO·TiO₂, CoO·TiO₂, MnO·TiO₂, ZnO·TiO₂, V₂O₃, Ga₂O₃ ou Rh₂O₃, ayant une structure d'α-Al₂O₃ et ayant une taille inférieure à 2 µm, ou un α-Al₂O₃ en solution solide avec au moins un de ces éléments, dans le sol d'alumine;
gélification du sol d'alumine en gel d'alumine; et
frittage du gel d'alumine à une température comprise entre 1000 et 1400°C.

2. Procédé de fabrication d'un grain abrasif constitué de particules de cristaux d'α-Al₂O₃, qui ne sont pas plus grandes que 0,5 µm, ayant en elles du Ti en solution solide, la longueur de l'axe a de la maille élémentaire hexagonale de l'α-Al₂O₃, mesurée par la diffraction des rayons X des poudres étant de 0,475892 à 0,476340 nm (4,75892 à 4,76340 Å), et le grain abrasif ayant une densité supérieure à 90% de la valeur théorique, par gélification du sol d'alumine en gel d'alumine, et ensuite par frittage dudit gel d'alumine, le procédé comprenant les étapes de:
addition de 0,005 à 2,23% molaires d'au moins un de oxyde de titane (ayant une structure d'α-Al₂O₃ et ayant une taille inférieure à 2 µm), hydroxyde de titane ou sel de titane dans le sol d'alumine;
gélification du sol d'alumine en gel d'alumine; et
frittage dans une atmosphère réductrice à une température comprise entre 1000 et 1400°C.

3. Procédé de fabrication d'un grain abrasif constitué de particules de cristaux d'α-Al₂O₃, qui ne sont pas plus grandes que 0,5 µm, ayant au moins un des éléments Mg, Ni, Co, Mn ou Zn en solution solide dans les particules de cristaux d'α-Al₂O₃, la longueur de l'axe a de la maille élémentaire hexagonale de l'α-Al₂O₃, mesurée par la diffraction des rayons X des poudres étant de 0,475892 à 0,476340 nm lorsque la matière en solution solide comprend Mn ou Zn, ou de 0,475930 à 0,476340 nm lorsque la matière en solution solide comprend Mg, Ni ou Co, et l'abrasif a une densité supérieure à 90% de la valeur théorique, par gélification d'un sol d'alumine en gel d'alumine, et ensuite par frittage dudit gel d'alumine, le procédé comprenant les étapes de:
addition de 0,05 à 2,23% molaires d'au moins un des hydroxydes, sels ou ions de Mg^{II}, Ni^{II}, Co^{II}, Mn^{II} et Zn^{II}, et leur rapport en équivalents molaires d'au moins un hydroxyde de titane ou un sel de titane, ensemble dans le sol d'alumine;
gélification du sol d'alumine en gel d'alumine; et
frittage à une température comprise entre 1000 et 1400°C.

4. Grain abrasif constitué de particules de cristaux d'α-Al₂O₃, qui ne sont pas plus grandes que 0,5 µm, qui peut être obtenu par un procédé selon l'une quelconque des revendications 1, 2 et 3, caractérisé en ce que lesdites particules contiennent en solution solide au moins un des éléments Ti, Mn, V, Ga, Zn, Rh, Mg, Ni ou Co, dans lesquelles la longueur de l'axe a de la maille élémentaire hexagonale de l'α-Al₂O₃, mesurée par la diffraction des rayons X des poudres étant de 0,475892 à 0,476340 nm (4,75892 à 4,76340 Å) lorsque ladite matière en solution solide comprend au moins un des éléments Ti, Mn, V, Ga, Zn ou Rh, ou de 0,475930 à 0,476340 nm (4,75930 à 4,76340 Å) lorsque ladite matière en solution solide comprend au moins un des éléments Mg, Ni ou Co, et que ledit grain abrasif a une densité supérieure à 90% de la valeur théorique.

5. Pierre abrasive ou tissu abrasif qui utilise comme matière abrasive le grain abrasif tel que revendiqué dans la revendication 1.
